# EUROPEAN PATENT SPECIFICATION

(11) **EP 1 993 770 B1**
(45) Date of publication and mention of the grant of the patent: **06.04.2011**
(21) Application number: 07713105.0
(22) Date of filing: 08.03.2007
(51) Int. Cl.: B23D 53/08, B23D 53/04, B23D 55/08

(54) **BAND SAWING MACHINE WITH MOBILE GANTRY FRAME FOR AXIAL CUTTING OF METAL TUBES OR BARS**
BANDSÄGEMASCHINE MIT BEWEGLICHEM BRÜCKENRAHMEN ZUM HILFSWEISEN SCHNEIDEN VON METALLROHREN ODER -STANGEN
MACHINE A SCIER A RUBAN AVEC CHASSIS DE PORTIQUE ROULANT POUR LE TRONÇONNAGE AXIAL DE TUBES OU BARRES METALLIQUES

(30) Priority: 10.03.2006 IT FI20060064
(43) Date of publication of application: 26.11.2008
(73) Proprietor: Del Chiaro, Giancarlo, 55049 Viareggio (IT)
(72) Inventor: Del Chiaro, Giancarlo, 55049 Viareggio (IT)
(74) Representative: Bardini, Marco Luigi
(86) International application number: PCT/IB2007/000544
(87) International publication number: WO 2007/105054

(56) References cited:
- GB-A- 190 023 013
- JP-A- 6 270 013
- JP-A- 11 285 920
- JP-A- 58 010 420
- US-A- 3 954 037
- US-A- 4 111 085
- US-A- 5 107 738
- US-A- 5 213 022

## Description

### Field of the Invention

The present invention relates to a band sawing machine for the axial cutting of metal bars or tubes as per the preamble of claim 1. Such a band sawing machine is known from JP 58 010 420 A.

### Background Art

In the field of metal structural work there is a greatly felt need for bars with a semicircular section or semi-tubular bars, particularly in ground stainless steel. The bars with semicircular section can be produced by casting and rolling, although their surface remains rough and would require a laborious and costly surface finishing treatment for many applications. In the case of semi-tubular bars production by roller leveling is problematical and does not provide satisfactory results as it is not possible to maintain the circular profile at the longitudinal edges.

The object of the present invention is to provide a band sawing machine for the axial cutting of metal bars or tubes which allows the requirements and needs indicated above to be met and which can also be used for the production of articles, taken from solid metal bar, which can normally be obtained, at significantly higher costs, by milling or turning.

A particular object of the present invention is to provide a sawing machine of the type mentioned above whose working overall dimensions do not exceed its maximum overall dimensions.

### Summary of the invention

These objects are achieved with the band sawing machine according to the combination of features of claim 1. Preferred embodiments are disclosed by the dependent claims.

### Brief description of the drawings

The features and advantages of the band sawing machine according to the present invention will be made clearer by the following description of one of its embodiments, given by way of a non-limiting example with reference to the accompanying drawings, in which:
- Figure 1 is a side elevation view of the sawing machine according to the present invention;
- Figure 2 is a plan view from above of the sawing machine of Figure 1;
- Figure 3 is a front view of the sawing machine of the previous figures, with parts removed for the sake of simplicity of illustration;
- Figure 4 is a rear view of the band sawing machine showing a first variation of the invention;
- Figure 5 is a front view of a second variation of the band sawing machine of the invention;
- Figure 6 is a side view of the band sawing machine of Figure 5.

### Detailed description of the invention

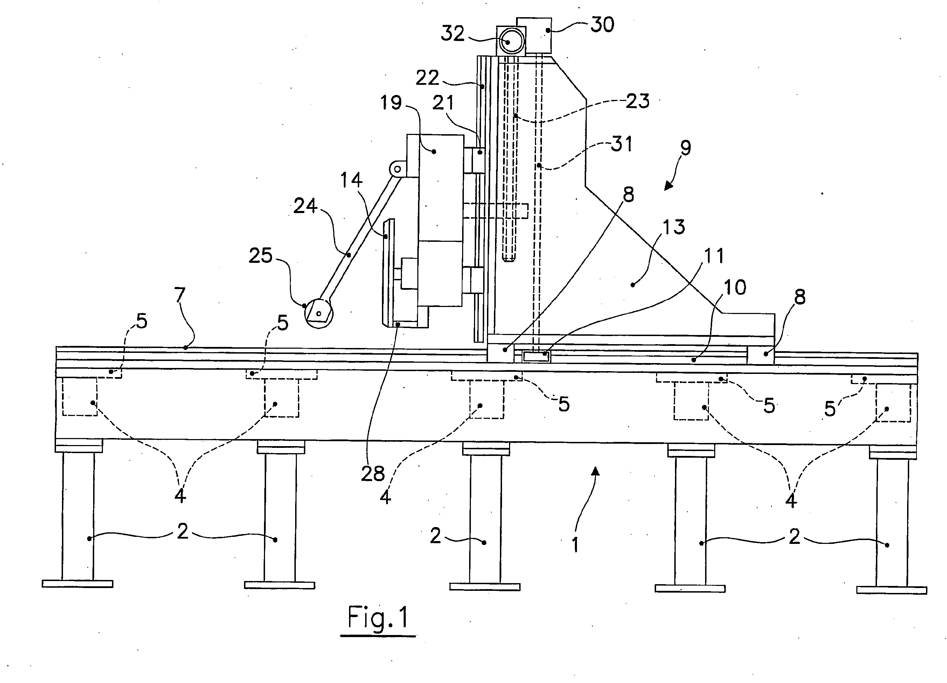

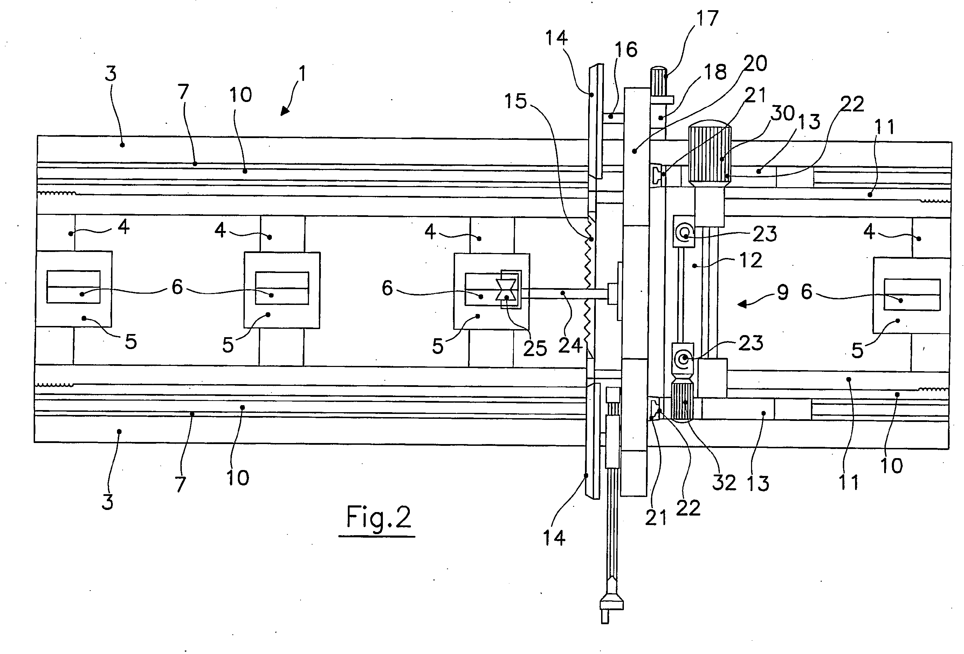

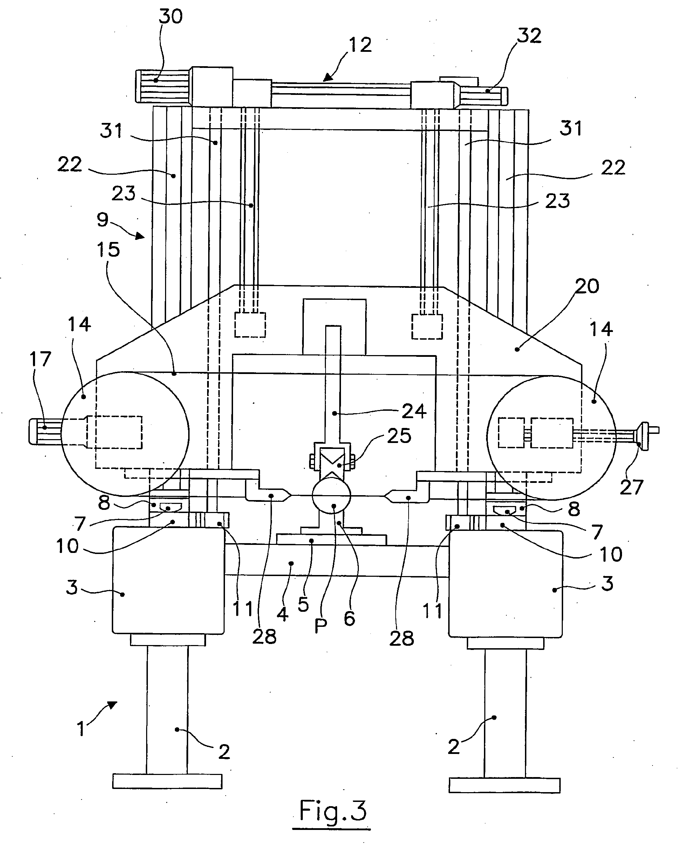

Referring to the figures 1-3, 1 denotes generically a support structure or stand formed by two rows of columns or uprights 2 which support two longitudinal members 3 connected one to the other by crosspieces 4 placed at the columns 2. On each of the crosspieces 4 a table 5 its placed, holding a support housing 6, advantageously notched in a V shape to support the piece P to be processed on the machine, as mentioned herein below. The support bases 6 of each table ware aligned longitudinally.

On the two longitudinal members 3 two respective hardened longitudinal guides 7 are mounted and two pairs of sliding blocks 8 for supporting a mobile bridge frame denoted generically by 9 rest on the guides 7. On the longitudinal members 3 two opposite racks 10 are also placed and pinions 11 with a vertical axis and fixedly connected to bridge frame 9 mesh on the racks 10.

The bridge frame 9 is made up of a first frame 12 placed transversely to the stand with two parallel side panels 13 extending from one of its sides and mounted on the sliding blocks 8. On the frame 12 a geared motor unit 30 is mounted which, thanks to shafting 31, transmits rotary motion to the pinions 11 for the movement of the bridge frame 9.

On the side opposite to that from which the two side panels 13 extend, the first frame 12 supports a second frame 20 having hardened vertical guides 22 in which sliding blocks 21 are arranged slidingly and are formed on the front of the first frame 12 at the side panels 13. The second frame 20 supports frontally two coplanar flywheels 14 with horizontal axes and a continuous band cutting blade 15 extending transversely in relation to the support 1 is wound on the flywheels 14. One of the two flywheels 14 is keyed on a shaft 16 made to rotate by a motor 17 via gearmotor 18. For reasons of safety the flywheels 14 and the blade 15 are enclosed in a casing 19 fixedly connected to the second frame 20 and shown in Figure 1 only. The vertical sliding of the second frame 20 is controlled by a pair of ball bearing screws 23 actuated by a geared motor unit 32.

The piece P (for example a cylindrical bar or a tube) to be cut axially into two halves is placed on the support housings 6 and blocked against horizontal sliding by means of a temporary weld or a counter bracket (not shown) at one of its ends, and against vertical sliding by a workpiece holder arm 24 ending with a grooved wheel 25 urged on the piece to be cut via elastic, hydraulic or pneumatic means. The arm 24 extends forwards from the casing 19 to which it is hinged, for example, in an elastic manner.

A blade tensioning device 26 with relatives adjustment handwheel 27 is associated with one of the two flywheels 14, while the blade, near the piece to be cut, is guided in a pair of blade guide arms 28. Clearly, a motorized device can be provided as an alternative for adjusting of the tension of the blade.

In a particularly advantageous embodiment of the invention the blade guide arms 28 are connected to the casing 19 so as to be able to perform axial rotation through 90°, which allows the working section of the blade to be rotated through 90°, bringing it from a horizontal position to a vertical position. In this way it is possible to perform the cutting of the piece also into sections of predefined length, when this is necessary. In this case the second frame 20, which supports the flywheels 14, lowers at a controlled speed thanks to the ball bearing screws 23 actuated by the motor 32.

The arrangement of the motors is purely an example and a single motor may be provided as an alternative. In this case the single motor transmits both the motion of vertical sliding of the second frame 20 and translation of the gantry 9 via suitable transmissions. In other versions actuation means of a different type may be provided, for example of the hydraulic type, and the pinion-rack system which transmits the motion of translation to the gantry 9 can be replaced with a ball bearing system.

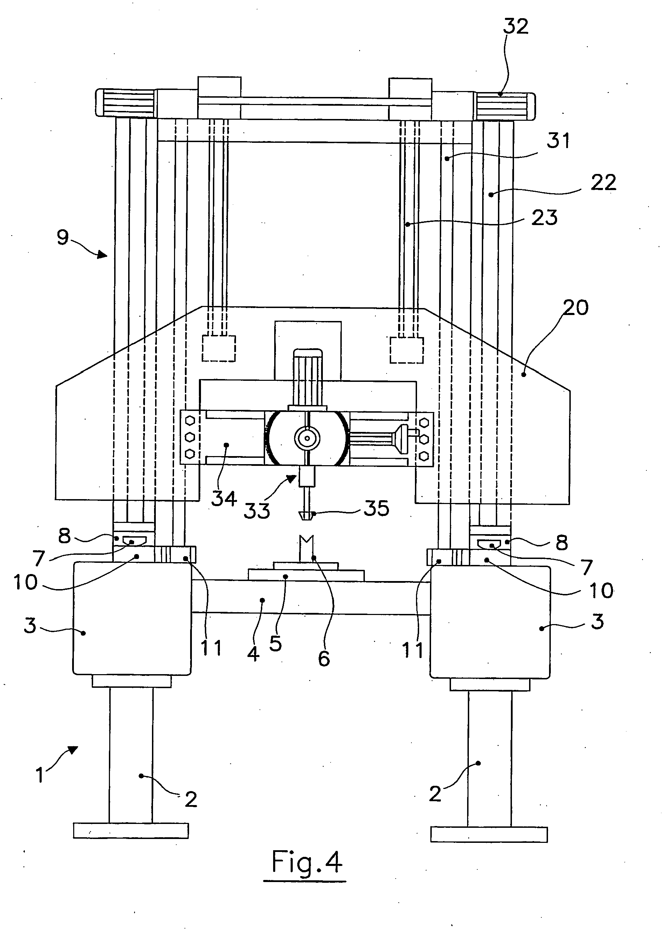

Advantageously, the band sawing machine according to the invention may be adapted to mount a removable milling unit shown in figure 4 and indicated at 33. The milling unit is supported by a plate 34 that can be temporarily attached, e.g. by screws, to the second frame 20. The milling unit is used to shape the housing 6 for the piece P according to its size so as to ensure a better positioning thereof. The milling unit is equipped with a milling tool 35 that can be displaced angularly with respect to the vertical position, shown in figure 4, and translates horizontally for a proper positioning in case a multiple-seat support housing has to be shaped.

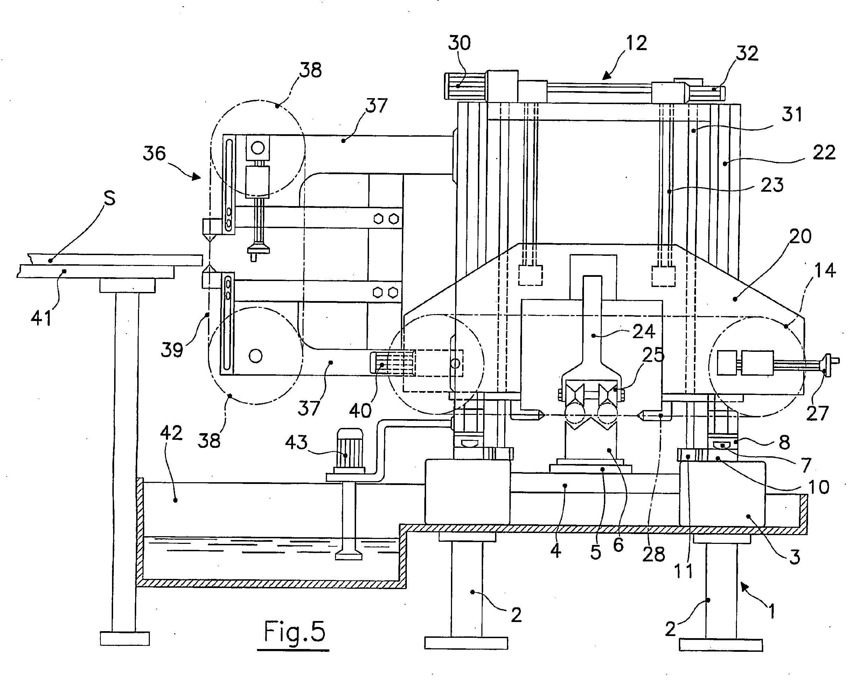

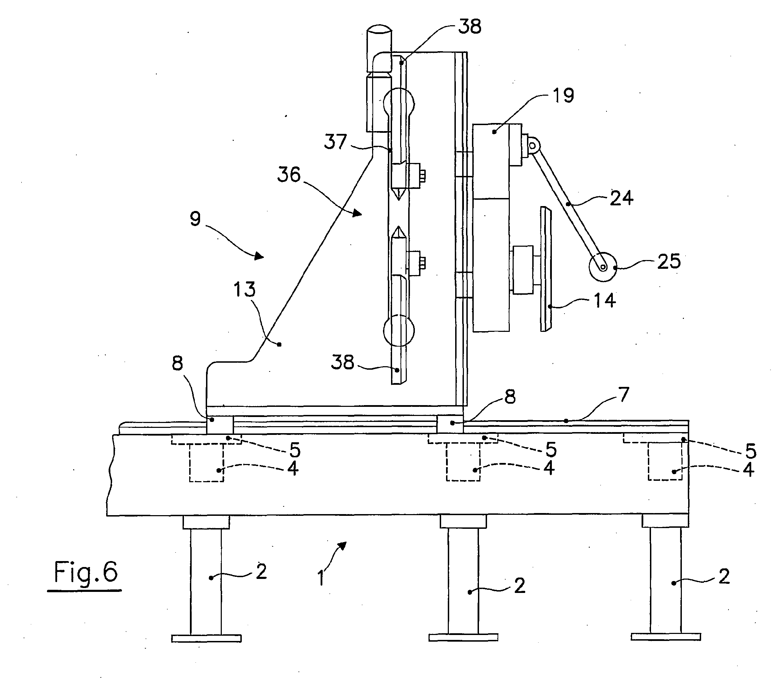

In the embodiment shown in figures 5 and 6, a band sawing machine according to the invention is shown in which a band sawing unit 36 is mounted laterally to permit sawing of metal sheets, such as that indicated at S, supported by a worktable 41 in figure 5. The band sawing unit 36 comprises a pair of arms 37 extending from one side of the first frame 12 and lying on a vertical plane. Each arm 37 supports pivotally a flywheel 38 and a continuous band saw blade 39 is wound around them. Rotation of flywheels 38 is provided by motor means 40. Means for tensioning the blade, of the known type, are provided.

In figure 5 there is also shown a cooling water tank 42 and relevant circulation pump 43 sucking from the tank 42. Cooling water facility of this type or other equivalent type although not shown, are obviously provided also for the embodiments shown in figures 1-3 and 4.

In the above embodiment of the invention metal chips are collected in the water tank 42 and must be periodically removed. As an alternative, a metal chips conveyor of the commercial type may be installed in the water tank.

A multiple-seat support housing 6 (in particular two-seat) is also shown in figure 5 to allow two pieces P to be axially cut at the same time. This feature may also be provided in the embodiments shown in figures 1-3 and 4.

Tests performed have shown that, using a blade 0.8 mm thick, it is possible to cut axially bars with a circular section in stainless steel starting with a minimum section of 4 mm. The typical length of the bars which it is possible to cut is 6 meters, although bars of different length, both greater and smaller, can be cut.

Naturally with the band saw according to the invention it is possible to obtain articles other than the semicircular bar. For example it is possible to obtain bars with a polygonal section from a cylindrical bar by removal of corresponding circular segments. It is also possible to produce parts with a special shape, obtained by means of successive vertical and horizontal cuts, parts that are normally obtained by milling or turning at significantly higher costs.

Various modifications and alterations to the invention may be appreciated based on the disclosure. These changes and addictions are within the scope of the invention as defined in the following claims.

## Claims

1. Band sawing machine for the axial cutting of metal tubes or bars comprising a support structure (1) provided with supports (6) for a piece (P) to be machined and a first frame (9) mounted thereon and holding a pair of coplanar motorized flywheels (14) with horizontal axes, on which a continuous band cutting blade (15) is wound, said frame (9) being mounted slidingly on said support structure (1) and motor means (30) being provided for transmitting a forward motion to said frame (9) in a longitudinal direction, during which the axial cutting of the piece (P) is performed, and motion of return to a starting position at the end of the cutting operation, **characterized in that** said supports (6) are longitudinally aligned and **in that** said frame (9) is a gantry frame (9) mounted transversely on said support structure (1).

2. Band sawing machine according to claim 1, wherein between said gantry frame (9) and said support structure (1) longitudinally extending linear sliding means (7, 8) are provided and means (10, 11) for transmission of forward and return motion of said gantry frame along said support structure (1) are also provided.

3. Band sawing machine according to claim 2, wherein said sliding means comprise a pair of sliding blocks (8) integral with said gantry frame (9) and slidingly engaged on longitudinal guides (7) formed on said support structure (1).

4. Band sawing machine according to claims 2 or 3, wherein said transmission means comprise a rack-pinion system (10, 11).

5. Band sawing machine according to any one of the previous claims, wherein said gantry frame (9) comprises a first frame (12) slidingly supported by said support structure (1) through said linear sliding means (7, 8) and a second frame (20) sliding vertically on said first frame (12), said pair of flywheels (14) being mounted on said second frame (20).

6. Band sawing machine according to claim 5, wherein motor means (32) are provided on said first frame (12) to transmit a vertical sliding motion to said second frame (20), means of linear sliding (23) between said first (12) and said second frame (30) being provided.

7. Band sawing machine according to any of the previous claims, wherein a pair of transversely aligned blade guide arms (28) are connected to said second frame (20), said arms being angularly adjustable in relation to their axis between a first position wherein the working section of the cutting blade supported by them is horizontal and a second position wherein it is vertical.

8. Band sawing machine according to any one of the previous claims, wherein a manually or motor actuated blade tensioning device (26) is provided integral with said second frame (20).

9. Band sawing machine according to any one of the previous claims, also comprising means (24, 25) for pressing the piece (P) being machined which are arranged frontally to said gantry frame (9) in order to hold the piece still on the underlying support (1) during the cutting operation.

10. Band sawing machine according to any one of the previous claims, further comprising a milling unit (33) removably fixable to a central portion of said second frame (20), the milling tool (35) of said milling unit (33) being orientable angularly and translatable horizontally.

11. Band sawing machine according to any one of the previous claims, further comprising a band sawing unit (36) for sawing metal sheets, of the type having a continuous band saw blade, sideways extending from said first frame (12).

12. Band sawing machine according to any one of the previous claims, wherein said support (6) for the piece (P) to be axially cut comprises at least a housing seat for said piece.

13. Band sawing machine according to any one of the previous claims, further comprising a tank (42) for cooling water and a circulation pump (43) sucking in said tank (42).

## Patentansprüche

1. Bandsägemaschine für das axiale Schneiden von Metallrohren oder -stäben, enthaltend eine Haltestruktur (1), die mit Halterungen (6) für ein zu bearbeitendes Teil (P) und einem ersten Rahmen (9) versehen ist, der daran montiert ist und ein Paar von co-planaren motorisierten Schwungrädern (14) mit horizontalen Achsen hält, auf welchen ein kontinuierliches Bandschneideblatt (15) gewickelt ist, wobei der Rahmen (9) verschiebbar an der Haltestruktur (1) montiert ist und Motoreinrichtungen (30) vorgesehen sind, um auf den Rahmen (9) in einer Längsrichtung eine Vorwärtsbewegung, während der das axiale Schneiden des Teils (P) ausgeführt wird, und eine Rückkehrbewegung zu einer Startposition am Ende der Schneideoperation zu übertragen, **dadurch gekennzeichnet, dass** die Halterungen (6) in Längsrichtung ausgerichtet sind und dass der Rahmen (9) ein Portalrahmen (9) ist, der transversal auf der Haltestruktur (1) montiert ist.

2. Bandsägemaschine nach Anspruch 1, wobei zwischen dem Portalrahmen (9) und der Haltestruktur (1) sich in Längsrichtung erstreckende lineare Verschiebeeinrichtungen (7, 8) vorgesehen sind und ferner Einrichtungen (10, 11) zum Übertragen einer Vorwärts- und Rückwärtsbewegung des Portalrahmens (9) längs der Haltestruktur (1) vorgesehen sind.

3. Bandsägemaschine nach Anspruch 2, wobei die Verschiebeeinrichtungen ein Paar Verschiebeblöcke (8) enthalten, die integral mit dem Portalrahmen (9) sind und verschiebbar on länglichen Führungen (7) eingreifen, die an der Haltestruktur (1) geformt sind.

4. Bandsägemaschine nach Anspruch 2 oder 3, wobei die Übertragungseinrichtungen ein Zahnstangen-Ritzel-System (10, 11) enthalten.

5. Bandsägemaschine nach einem der vorhergehenden Ansprüche, wobei der Portalrahmen (9) einen ersten Rahmen (12), der verschiebbar von der Haltestruktur (1) durch die linearen Verschiebeeinrichtungen (7, 8) gehalten wird, und einen zweiten Rahmen (20) enthält, der sich vertikal an dem ersten Rahmen (12) verschiebt, wobei das Paar Schwungräder (14) an dem zweiten Rahmen (20) montiert ist.

6. 3. Bandsägemaschine nach Anspruch 5, wobei Motoreinrichtungen (32) an dem ersten Rahmen (12) vorgesehen sind, um eine vertikale Verschiebebewegung auf den zweiten Rahmen (20) zu übertragen, wobei Einrichtungen für eine Linearverschiebung (23) zwischen dem ersten (12) und zweiten Rahmen (20) vorgesehen sind.

7. Bandsägemaschine nach einem der vorhergehenden Ansprüche, wobei ein Paar von transversal ausgerichteten Blattführungsarmen (28) mit dem zweiten Rahmen (20) verbunden sind, wobei die Arme in Relation zu ihrer Achse zwischen einer ersten Position, in der der von ihnen gehaltene Arbeitsabschnitt des Schneideblattes horizontal ist, und einer zweiten Position winkelmäßig einstellbar ist, in der er vertikal ist.

8. Bandsägemaschine nach einem der vorhergehenden Ansprüche, wobei eine manuell oder motorbetätigte Blattspannvorrichtung (26) integral mit dem zweiten Rahmen (20) vorgesehen ist.

9. Bandsägemaschine nach einem der vorhergehenden Ansprüche, ferner enthaltend zum Drücken des Teils (P), das verarbeitet wird, Einrichtungen (24, 25), die frontal bezüglich des Portalrahmens (9) angeordnet sind, um das Teil während der Schneideoperation ruhig auf der Unterlagenhalterung zu halten.

10. Bandsägemaschine nach einem der vorhergehenden Ansprüche, ferner enthaltend eine Fräseinheit (33), die entfernbar an einem zentralen Teil des zweiten Rahmens (20) befestigbar ist, wobei das Fräswerkzeug (35) der Fräseinheit (33) winkelmäßig orientierbar und horizontal versetzbar ist.

11. Bandsägemaschine nach einem der vorhergehenden Ansprüche, ferner enthaltend eine Bandsägeeinheit (36) zum Sägen von Metallblechen, des Typs, der ein kontinuierliches Bandsägenblatt hat, sich seitwärts von dem ersten Rahmen (12) erstreckend.

12. Bandsägemaschine nach einem der vorhergehenden Ansprüche, wobei die Halterung (6) für das Teil (P), das axial zu schneiden ist, wenigstens einen Aufnahmesitz für das Teil enthält.

13. Bandsägemaschine nach einem der vorhergehenden Ansprüche, ferner enthaltend einen Tank (42) für Kühlwasser und eine Zirkulationspumpe (43), die in dem Tank (42) saugt.

## Revendications

1. Machine à scier à ruban pour la coupe axiale de tubes ou de barres métalliques comprenant une structure support (1) munie de supports (6) pour une pièce (P) devant être usinée et un premier châssis (9) monté sur celle-ci et maintenant une paire de volants d'inertie motorisés coplanaires (14) ayant des axes horizontaux, sur lesquels est enroulée une lame de coupe en forme de bande continue (15), ledit châssis (9) étant monté coulissant sur ladite structure support (1) et des moyens de moteur (30) étant prévus pour transmettre au dit châssis (9) un mouvement vers l'avant suivant une direction longitudinale, au cours duquel est réalisée la coupe axiale de la pièce (P), et un mouvement de retour à une position origine à la fin de l'opération de coupe, **caractérisée en ce que** lesdits supports (6) sont alignés longitudinalement et **en ce que** ledit châssis (9) est un châssis en forme de portique monté transversalement sur ladite structure support (1).

2. Machine à scier à ruban selon la revendication 1, où entre ledit châssis en forme de portique (9) et ladite structure support (1) sont prévus des moyens de coulissement linéaire (7, 8) s'étendant longitudinalement et aussi des moyens de transmission (10, 11) du mouvement vers l'avant et de retour du dit châssis en forme de portique le long de ladite structure support (1).

3. Machine à scier à ruban selon la revendication 2, où lesdits moyens de coulissement comprennent une paire de blocs coulissants (8) solidaires du dit châssis en forme de portique (9) et montés de façon coulissante sur des guides longitudinaux (7) réalisés sur ladite structure support (1).

4. Machine à scier à ruban selon l'une des revendications 2 et 3, où lesdits moyens de transmission comprennent un système pignon-crémaillère (10, 11).

5. Machine à scier à ruban selon l'une quelconque des revendications précédentes, où ledit châssis en forme de portique (9) comprend un premier châssis (12) porté de façon coulissante par ladite structure support (1) via lesdits moyens de coulissement linéaire (7, 8) et un second châssis (20) coulissant verticalement sur ledit premier châssis (12), ladite paire de volants d'inertie(14) étant montée sur ledit second châssis (20).

6. Machine à scier à ruban selon la revendication 5, où sont prévus des moyens de moteur (32) sur ledit premier châssis (12) pour transmettre un mouvement de coulissement vertical au dit second châssis (20), des moyens de coulissement linéaire (23) étant prévus entre ledit premier (12) et ledit second châssis (30).

7. Machine à scier à ruban selon l'une quelconque des revendications précédentes, où une paire de bras de guidage de lame (28) alignés transversalement est reliée au dit second châssis (20), lesdits bras étant réglables angulairement par rapport à leur axe entre une première position où le plan de coupe de la lame de coupe portée par eux est horizontal et une seconde position où il est vertical.

8. Machine à scier à ruban selon l'une quelconque des revendications précédentes, où un dispositif de tension de lame (26) actionné manuellement ou par moteur est solidaire du dit second châssis (20).

9. Machine à scier à ruban selon l'une quelconque des revendications précédentes, comportant également des moyens (24, 25) pour appuyer sur la pièce (P) devant être coupée qui sont agencés de façon frontale par rapport au dit châssis en forme de portique (9) afin de maintenir la pièce immobile sur le support susmentionné (1) pendant l'opération de coupe.

10. Machine à scier à ruban selon l'une quelconque des revendications précédentes, comportant en outre une unité de fraisage (33) fixée de façon démontable sur une partie centrale du dit second châssis (20), l'outil de fraisage (35) de ladite unité de fraisage (33) pouvant être orienté angulairement et translaté horizontalement.

11. Machine à scier à ruban selon l'une quelconque des revendications précédentes, comprenant en outre une unité de sciage à bande (36) pour scier des feuilles métalliques, du type ayant une lame de scie en bande continue, situées latéralement au dit premier châssis (12).

12. Machine à scier à ruban selon l'une quelconque des revendications précédentes, où ledit support (6) pour la pièce (P) devant être coupée axialement comprend au moins un siège pour y loger ladite pièce.

13. La machine à scier à ruban selon l'une quelconque des revendications précédentes, comportant en outre un réservoir (42) pour de l'eau de refroidissement et une pompe de circulation (43) aspirant dans ledit réservoir (42).
